# EUROPEAN PATENT APPLICATION

(11) **EP 2 645 450 A1**
(43) Date of publication of application: **02.10.2013**
(21) Application number: 13161155.0
(22) Date of filing: 26.03.2013
(51) Int. Cl.: H01M 2/10, H01M 2/20, H01M 10/48

(54) **Reliable and efficient connection for batteries**

(30) Priority: 26.03.2012 GB 201205232
(71) Applicant: Leclanché S.A., 1401 Yverdon-les-Bains (CH)
(72) Inventor: VOLLUZ, Patrick, 1401 Yverdon-les-Bains (CH); CHAZARENC, Elie, 1401 Yverdon-les-Bains (CH); DUNANT, Etienne, 1401 Yverdon-les-Bains (CH)
(74) Representative: Sonnenberg, Fred

(57) **Abstract**

The disclosure relates to a method and an apparatus for electrically contacting at least one electrode (22, 23) of one or more electrochemical cells. The apparatus comprise a nonconductive electrode pass-through element (4) with at least one electrode pass-through opening (41) and at least one contact element (6) at least partially made from a conductive material and releasably mountable to the electrode pass-through element (4) with a defined pressure.

## Description

The present disclosure relates to battery stacks and to a method for the manufacture thereof. The present disclosure relates in particular to an apparatus and a method for providing electrical contacts in a battery and to electrically contacting electrochemical cells of a battery.

### Background of the invention

Primary and secondary batteries are used in many different applications from micro-devices over handheld electronic devices such as mobile phones, computers to applications for vehicles and immobile applications. There is a need for batteries with very different voltages and capacities that should be adapted to the required application.

Primary and secondary batteries usually comprise a plurality of electrochemical cells. Depending on the technology and on the chemistry used, electrochemical cells have a defined nominal cell voltage. A plurality of electrochemical cells can be connected in series, in parallel or in any combination thereof in order to achieve a desired nominal voltage and/or the desired capacity of the final battery. Applications and requirements of batteries differ considerably and battery suppliers have to provide batteries with different nominal voltages and/or capacities as well as different sizes and weights.

State of the art batteries are assembled by welding or fixedly connecting electrodes of the electrochemical cells. Electrochemical cells for example in lithium ion technology are often available as pouch type cells where a plurality of electrochemical cells is arranged inside a sealed pouch. A plurality of these pouches have to be stacked and connected to obtain voltages and capacities required in large scale applications. These state of the art systems are not very flexible.

Furthermore, electrical contacts of the electrodes are often not well defined and the contact surface and thus the contact resistance cannot be well determined.

It is an object of the present invention to overcome the disadvantages of prior art.

### Summary of the invention

The present disclosure suggests an apparatus, a battery comprising such an apparatus, and a method for electrically contacting at least one electrode contact of one or more electrochemical cells. The apparatus comprises a non-conductive electrode pass-through element with at least one electrode pass-through opening and at least one contact element. The at least one contact element is at least partially made from a conductive material and releasable mountable to the electrode pass-through element with a defined pressure. The defined pressure may be controlled and enables a well defined electrical contact of the contact element with a controllable and defined contact resistance.

The non-conductive electrode pass-through element has the advantage that the electrochemical cells can be arranged at a first side of the pass-through element and the electrode of the at least one electrochemical cell can be passed through the pass-through opening to be contacted at a second side of the pass-through element. This allows easier access to the contacts. The first side may be called cell facing side or cell side of the electrode pass-through element as the one or more electrochemical cells may be arranged at this side of the pass-through element. The second side may be called contact side as the at least one electrode of the one or more electrochemical cells is electrically contacted at this side.

The at least one electrochemical cell may be arranged at the apparatus such that the at least one electrode passes through the at least one electrode pass-through opening, and that the electrode is clamped by the defined controlled pressure between the electrode pass-through element and the at least one contact element. The electrode may be bent after being passed through the pass-through opening. The electrode may be bent by about 90° to be clamped between the contact side of the pass-through element and the contact element.

An electrode contact within the meaning of the present disclosure refers to a contact element that is in direct electric contact with one of the electrodes of the electrochemical cell. The electrode may be made of a foil-type conductive material and may be an extension of the current collector used in the electrochemical cell. The electrode contact may also be referred to as electrode.

A plurality of the pass-through openings may be are arranged in at least one row. Depending on the type of electrochemical cells used, the pass-through openings may be arranged in two rows.

The one or more openings in the electrode pass-through element may have the form of a slit or any other form substantially corresponding to the shape of the electrodes. If foil-like electrodes are used, as for example with pouch cells, slits are used. Holes or bores may be used if the electrodes are wires. The openings may have dimensions that are somewhat large than the dimension of the electrode to allow the electrode to pass through the pass through openings easily.

One or more rows may be arranged and spaced from each other to correspond to the electrodes when a plurality of pouch-type cells is stacked.

The non-conductive electrode pass-through element may be a board made from an electrically insulating material. Any electrically non-conducting material may be used. In one particular example, the electrode pass-through element may be a printed circuit board (PCB). The printed circuit board provides a substantially non-conductive material that can provide further functions.

The further functions may comprise one or more sensor contacts arranged adjacently to one or more of the pass-through openings, one or more electrical connections and optionally one or more sensors and/or a monitoring unit. It is also possible to integrate electrical circuitry in the PCB board. Using the PCB board allows the implementation of additional features such as voltage control, temperature control and others into the apparatus.

The at least one contact element may be a busbar. The busbar may contact one or more electrodes. In one example, a busbar may contact two electrodes allowing to electrically connect adjacent electrochemical cells or pouches, for example in series.

The busbar is arranged on the contact side of the board such that the contact surface covers at least one of the pluralities of openings in the board. The busbar is pressed with a predetermined pressure against the contact side of the board. Using a busbar and a board with the plurality of openings enables to contact the electrochemical cells by arranging the electrodes or parts of the electrodes between the busbar and the contact side of the board. Applying a controlled pressure onto the busbar results in a well defined contact area and a well defined contact resistance to the electrodes. Voltage sensor and/or temperature sensors may be applied as sensors.

The at least one contact element may have a substantially planar contact surface. The contact surface is pressed against the electrode and the pass-through element. The planar contact surface may be made from a conductive material.

At least a portion of the planar contact surface may be may have a rough or roughened surface for enhancing the electrical contact with the electrode. The rough or roughened surface may comprise at least one of a serrated or notched surface, one or more blades or protrusions or a combination thereof.

The contact element may comprise a control receiving section for receiving and holding a control device. The control device can comprise a voltage and/or temperature control and can control one or more parameter of the one or more electrochemical cells.

The present invention also relates to a pass-through element and a contact element.

The present invention also suggest a method for electrically contacting at least one electrode of one or more electrochemical cells. The method comprises passing the at least one electrode through an electrode pass-through opening of a non-conductive electrode pass-through element, bending a portion of the at least one electrode passed through the electrode pass-through opening, and arranging the portion of the at least one electrode between the electrode pass-through element and one at least partially conductive contact element and pressing the contact element against the electrode pass-through element with a defined, controlled pressure.

### Description of the figures

The invention may be better understood when reading the detailed description of examples of the present disclosure that are explained with respect to the accompanying figures, in which:

Fig. 1 shows an assembled battery without housing in accordance with the present disclosure;

Fig. 2 shows the battery stack of Fig. 1 with one contact element removed;

Fig. 3a shows a pouch cell containing a plurality of electrochemical cells and Fig. 3b a stack of a plurality of the pouch cells of Fig. 3a;

Fig. 4 shows the pouch stack of Fig. 3b with attached PCB board;

Fig. 5 shows an example of a PCB board that can be used with the present disclosure;

Fig. 6 shows a detail of the PCB board of Fig. 4 with attached busbars;

Fig. 7 shows an example of a busbar and

Fig. 8 shows an alternative example of a busbar.

### Detailed description

The following detailed description gives examples for the implementation of the present disclosure. While several features of the present disclosure are implemented in the described examples, it is to be understood that the invention is not limited to those combinations and that a person skilled in the art will select those features that are appropriate for a specific application.

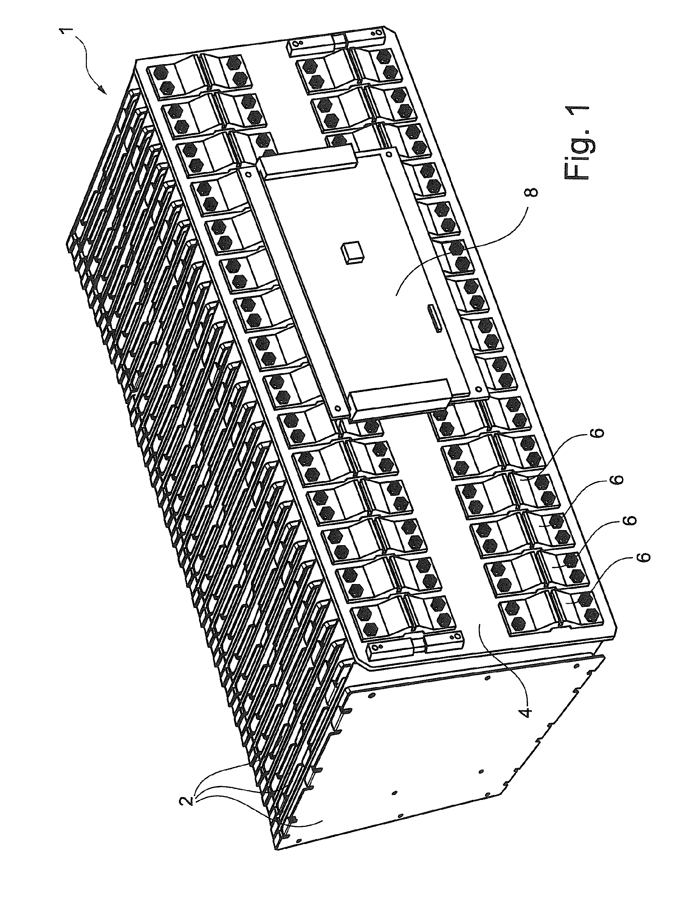

Fig. 1 shows a battery stack 1 according to the present disclosure. The battery stack 1 forms the basis of a primary or secondary battery. The battery stack 1 may be arranged inside a battery housing (not shown). The battery housing is generally known in the art and any known battery housing made from different materials and in different shapes can be used with the present disclosure. A standard housing such as a 19" rack may be used for example.

The battery stack 1 comprises a plurality of pouch cells 2 that are stacked to form a battery. Each one of the pouch cells 2 contains a plurality of electrochemical cells inside a pouch. A plurality of different pouch cells 2 are known in the art and are commercially available and any type of pouch cell 2 can be used with the present disclosure. The pouch cells 2 comprise two electrodes, a positive electrode 22 and a negative electrode 23 which are, in the example shown, both arranged on the same side of the pouch cell 2. The pouch cells 2 are stacked in this example such that all electrodes 22, 23 face the same side and are arranged in two rows.

The plurality of pouch cells 2 are arranged at a first side, the cell side of a printed circuit board 4 (PCB). The electrodes of the pouch cells 2 are attached to the PCB 4 by one or more busbars 6 fixed to a second side, the contact side 46 of the PCB 4. The contact side of the PCB is opposite to the cell side. The busbars 6 are arranged in two rows corresponding to the electrode rows formed by a stack of pouches cells 2 as will be explained later.

A control board 8 may be attached to the backside of the busbars 6. The control board may also be termed monitoring unit 8 and is used for electronically controlling parameters of the battery stack 1, as illustrated in the example shown in Fig. 1. This enables a compact arrangement and direct contact to the cells. A control, however, may be arranged differently, if desired.

The busbars 6 are attached to the contact side 46 of the PCB 4 whereas the pouch cells 2 are arranged on the cell side 42 of the PCB 4.

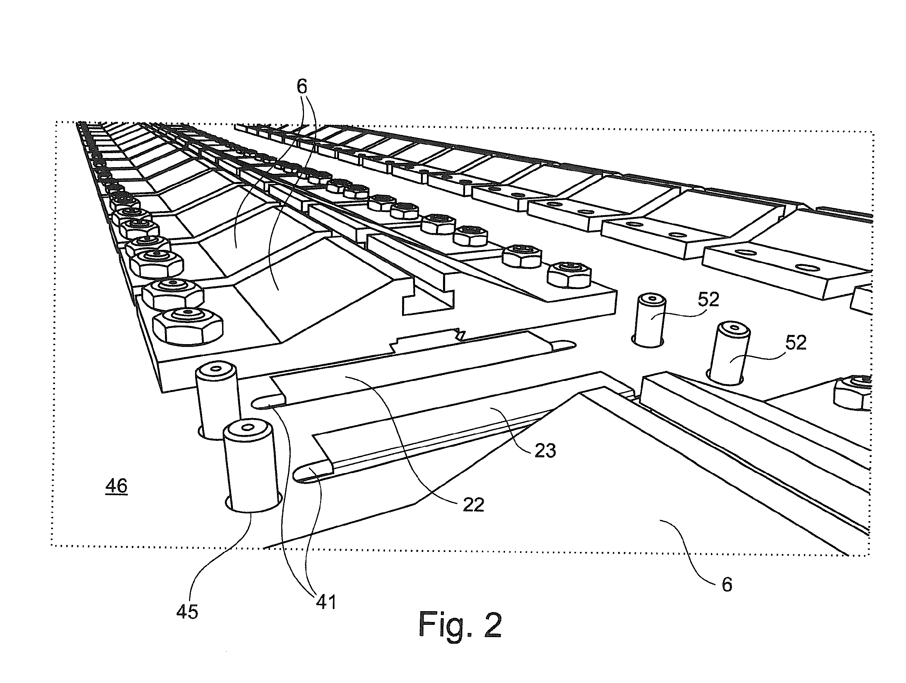

Fig. 2 shows the PCB 4 with attached busbars 6 of Fig. 1 from a different perspective. One of the busbars 6 is removed to show the contact area for contacting electrode contacts 22, 23 of the pouches 2. The PCB board 4 has a plurality of openings in form of a slot or slit 41. At the place where the busbar 6 is removed from the PCB 4, two slits 41 are visible in the example shown. If the removed busbar 6 is put into place, the slits 41 are covered by the busbar 6. The slits 41 are arranged in parallel and substantially correspond to the arrangement of the electrode contacts 22, 23, when the pouch cells 2 are stacked. The electrode contacts 22, 23 are passed through each one of the slits 41 and bend to form a layer parallel to a contact side 46 of the PCB 4.

The PCB 4 further has a plurality of holes 47 through which bolts or screws 52 are passed. Screws 52 are used to fix the busbar 6 to the PCB 4. Using conventional nuts 54 with the screws or threaded bolts 52 allows to press the busbar 6 against the PCB 4 with a well defined pressure. Other ways for fixing the busbar 6 to the PCB 4, such as for example rivets or pop rivets, may be used as well. The electrodes 22, 23 are arranged between the PCB 4 and the busbar element 6 and are thereby pressed and contacted in a well defined manner and with a well defined contact resistance.

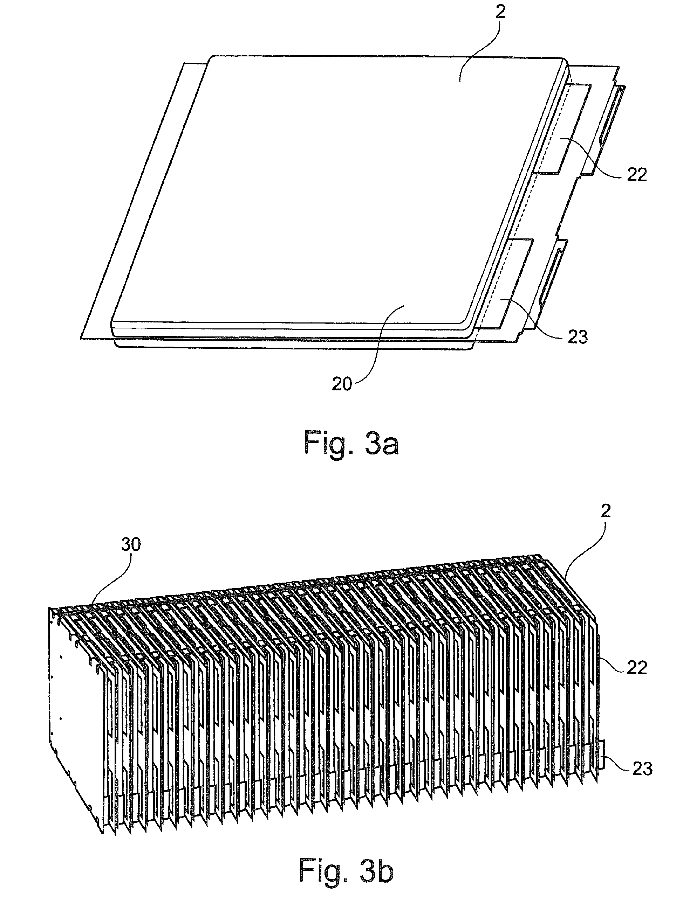

Fig. 3a shows a conventional pouch cell 2 that can be used with the present disclosure. Different types of pouch cells 2 are known in the art and can be used with the present invention. The pouch type cell 2 usually has a plurality of electrochemical cells arranged inside a pouch 20. Each one of the electrochemical cells comprises at least an anode, a cathode and a separator and an electrolyte material between the anode and the cathode. Both, the cathode and the anode are connected to a current collector, which is connected to electrode contacts 22 and 23, respectively. The electrode contacts may also be termed electrode 22, 23, i.e. positive electrode 22 and negative electrode 23 of the pouch.

In the example shown in Fig. 3a the positive electrode contact 22 and the negative electrode contact 23 are both arranged on the same side of the pouch 20. Other types of pouches are known in the art and may be used with the present disclosure. For example, the positive electrode contact 22 and the negative electrode contact 23 can be arranged on different sides of the pouch, i.e. on opposite sides of the pouch. In this case, the PCB may only have one row of slits and tow PCB may be arranged on the different sides of the pouch cells.

While the present example is described with respect to pouch-type cells 2, other type of cells can be equally used with the present disclosure. The present disclosure may, however, be particularly useful with lithium containing pouch cells, in particular with large format pouch cells having dimensions of about 10 x 10 cm or more.

The positive electrode contact 22 and the negative electrode contact 23 are made from a flexible and conducting material. Aluminium foils are frequently used and provide well defined electrical contacts with the present disclosure but other conducting materials, such as copper can be used as well.

The positive electrode contact 22 and the negative electrode contact 23 may be called electrodes of the pouch cell 2. Although the electrode contacts 22, 23 are not electrodes in the original sense, i.e. they do not exchange ion with the electrolyte, these contacts provide the electrical contact to the actual electrodes inside the electrochemical cells and are therefore often called electrodes 22, 23 of a pouch cell 2 for convenience.

Fig. 3b shows how a plurality of pouch cells 2 can be stacked to form a battery stack 1. The pouch cells 2 are arranged adjacently to each other such that the electrodes 22, 23 form two aligned rows 221, 222. The electrodes 22, 23 can be arranged in a way that a first row 221 is formed by positive electrodes 22 while the second row 222 is formed by negative electrodes 23. Other arrangements are also possible and depend on the desired configuration of the final battery. For example, the pouch cells 2 may be arranged in the stack in a way that positive electrodes 22 and negative electrodes 23 are arranged alternating in both rows 221, 222.

The pouch cells 2 are usually made from a foil type material and are to some extent flexible. The pouch cell 2 can therefore be arranged in a pouch support 30 to mechanically stabilise the cells and to give the stacked cells a ridged structure. The pouch support 30 may be a support frame or any other pouch support known in the art. It is also possible to arrange stabilizing plates between pouch cells 2 and/or at the front and back end to stabilize the rack. The stabilizing plates may also serve as or may be replaced by heat transfer plates arranged between pouch cells 2 and/or at the front and back end. The heat transfer plates may be used for efficient heating and/or cooling of the pouch cells 2.

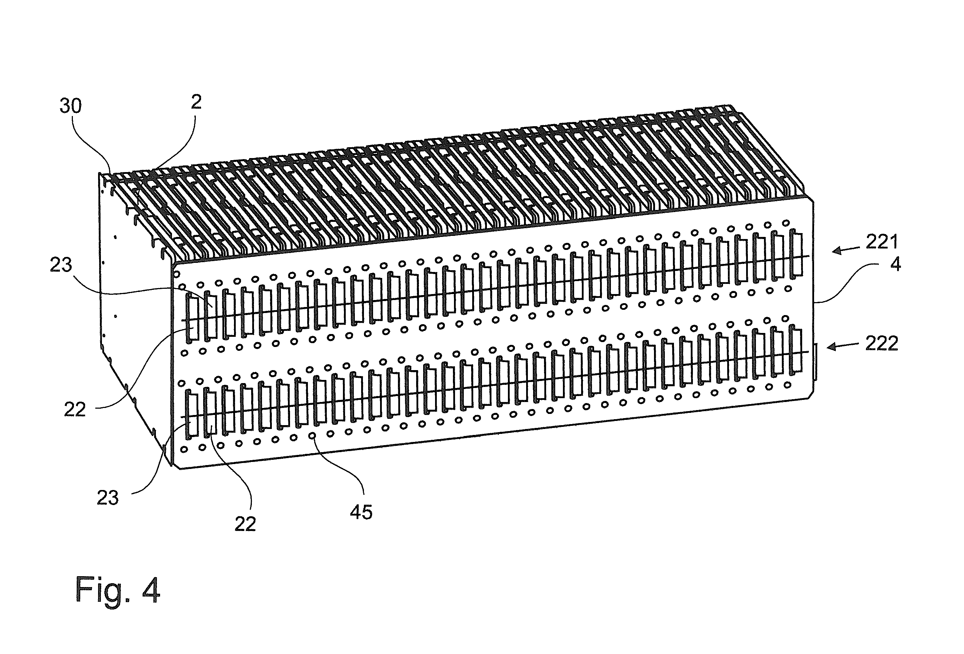

Fig. 4 shows a PCB 4 arranged at the stack of pouch cells 2 shown in Fig. 3. The foil type electrodes 22, 23 are passed through slits 41 formed in the PCB 4. In this way the foil type electrodes 22, 23 pass from the pouch side 42 of the PCB 4 towards the contact side 46 where they are bent onto the contact side 46 of the PCB 4. The PCB 4 further has a plurality of holes 45 through which screws 52 or other fastening means can be inserted. Bolts or screws 52 may also be directly fixed to the PCB 4.

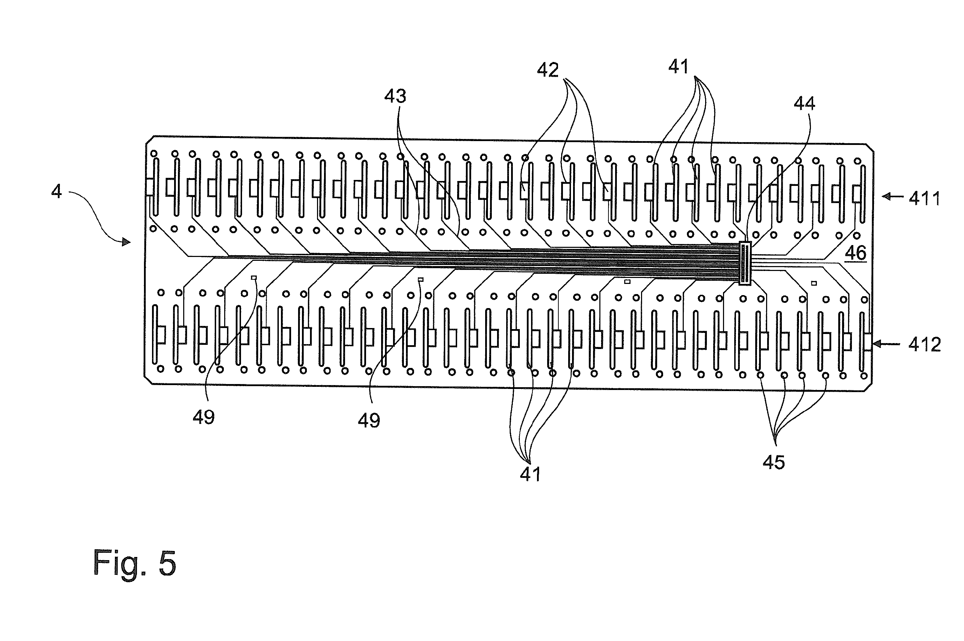

Fig. 5 shows the PCB 4 that may be used with the present disclosure in more detail. Fig. 5 shows the contact side 46 of the PCB 4 without inserted electrodes 22, 23. Printed circuits are arranged on the contact side 46 of the PCB 4. The PCB 4 has a plurality of slit like openings 41 arranged in two slit rows 411, 412. The slit-like openings or slits 41 have a length and a width which allows to pass the electrodes 22, 23 through them. The width of the slits 41 may thus be larger than the thickness of the electrodes 22, 23. In the example shown two rows of slits 411, 412 wherein the slits 41 are arranged parallel to each other. The slits 41 are arranged at a distance from each other corresponding substantially to the thickness of a pouch cell 2 and substantially corresponding to the first row 211 and the second row 222. The thickness of the pouch support 30, cooling channels or the like may also be considered when determining the distance of the slits 41 with respect to each other.

The printed circuit comprises a plurality of voltage contact surfaces 42 arranged at each one or at a selected number of slits 41. The voltage contact surfaces 42 may be printed in the usual manner on the PCB 4 and may be made from copper or another conducting material. The voltage contact surfaces 42 are electrically contacted via a voltage line 43 to a plug 44. The plug 44 may be used to electrically contact each of the voltage contact surfaces 42 with the control 8 or any other control means. The voltage contact surfaces 42 can be used to measure the voltages of each one of the electrochemical cells or of a combination of the pouch cells.

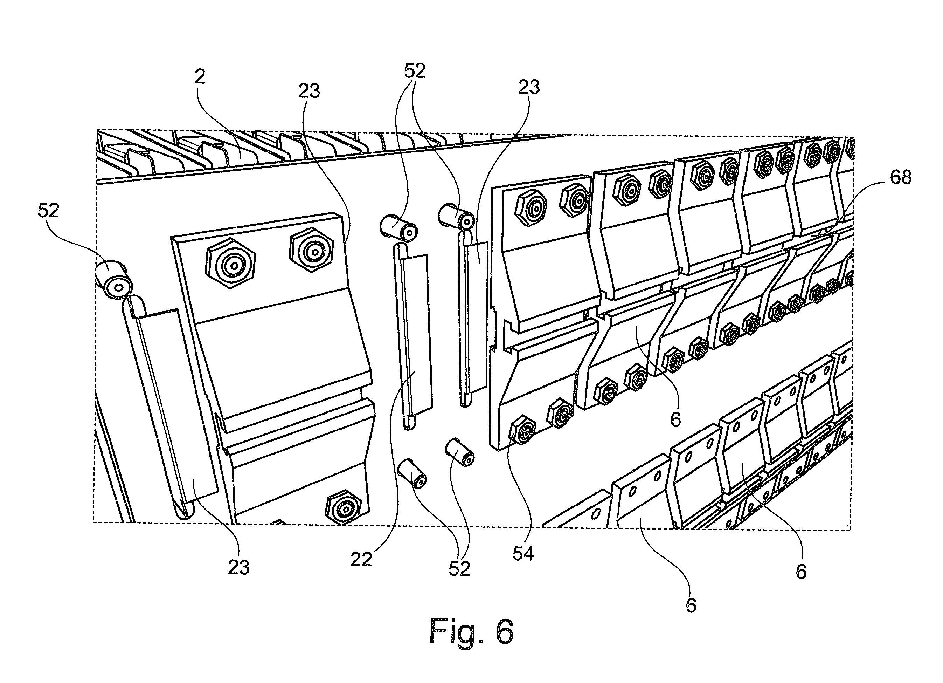

As shown in Fig. 5 each slit 41 has a voltage contact surface 42. Only each second slit 41, however, is connected to a voltage line 43 and to the plug 44. This is due to the employment of conducting busbars 6 that each cover two slits 41 as will be described with respect to Fig. 6. It is however possible, that busbars 6 will cover more than two slits 41. In this case it is not necessary to contact the voltage contact surface 42 of each second slit 41.

While in the example shown the voltage contact surfaces 42 are connected via plug 44 to the control 8, it is also possible to provide electronics, further circuitry or a battery control directly on the PCB 4.

Further sensors 49, such as for example temperature sensors and/or cell voltage sensors, or others may be provided on PCB 4 to directly measure the temperature, cell voltage or other battery parameters on the PCB 4. Fuses and other electronic or electric component can also be provided on the PCB 4.

While the present example is described with respect to a PCB 4, other boards for example made from different material can be used with the present invention. Boards of insulating material can be used. The advantage of using a PCB 4 is that voltage lines 43 and the voltage contact surfaces 42 can be easily implemented.

The dimensions, in particular the length and width of the PCB 4 is only limited by the requirements of the battery stack 1. The length of the board and the number of slits 41 1 only depends on the number of pouch cells 2 that shall be arranged in the battery stack 1.

PCB4 may be provided with a large number of slits 41. If less pouch cells 2 than slits 41 are used, the PCB can simply be cut and shortened and be thus adapted to the desired size of the battery stack 1.

Fig. 6 shows the arrangement of busbars 6 on the PCB 4 of Fig. 4. In the shown example, a busbar 6 always covers two adjacently arranged electrodes 22, 23. The busbar 6 thus covers two slits 41 and contacts two electrodes. The busbar 6 is made from an electrically conducting material and provides an electrical contact between positive electrode 22 of a first pouch cell 2 and the negative electrode 23 of the adjacent pouch cell 2. This allows connecting the pouch cells 2 in series but other arrangements are possible as well.

A plurality of screws 52 is inserted in each one of the holes 45. It also possible to provide threaded holes 45 or to provide threaded bolts. In the example shown, two screws 52 are provided on each side of each slit 41. A busbar covering two slits 41 and thus two electrical contacts 22, 23 may be fixed or mounted by in total four screws 52 and four corresponding nuts 54. The nuts 54 may be fastened with a predetermined momentum in order to ensure a predetermined and well defined pressure applied onto the busbar 6 and thus onto the PCB 4. In this way the electrodes 22, 23 arranged between the PCB 4 i.e. the contact surface 46 of PCB 4 and the busbar 6, can be very well defined. This allows a well defined contact pressure and a well-defined contact resistance.

It is also possible to provide a threaded hole in the PCB 4 or to attach nuts 54 directly to the PCB 4. Washers may be used.

The busbars 6 are covering two electrodes 22, 23 in the example shown. Two rows of busbars 611, 612 are provided to contact the electrodes 22, 23 of the pouch cells 2. The busbars of the upper row 611 and of the lower row 612 are arranged displaced or offset with respect to each other. This will leave one electrode 22 or 23 on each side of the PCB 4 uncovered by a busbar 6. These uncovered electrodes 22, 23 will form the battery contacts i.e. the plus contact and the minus contact of the final battery stack 1. At this end smaller contact elements may be used as battery contacts that cover only one slit 41 and thereby only one electrode 22, 23. The plus contact and/ or the minus contact may be in electrical contact with further batteries, either in parallel or in series.

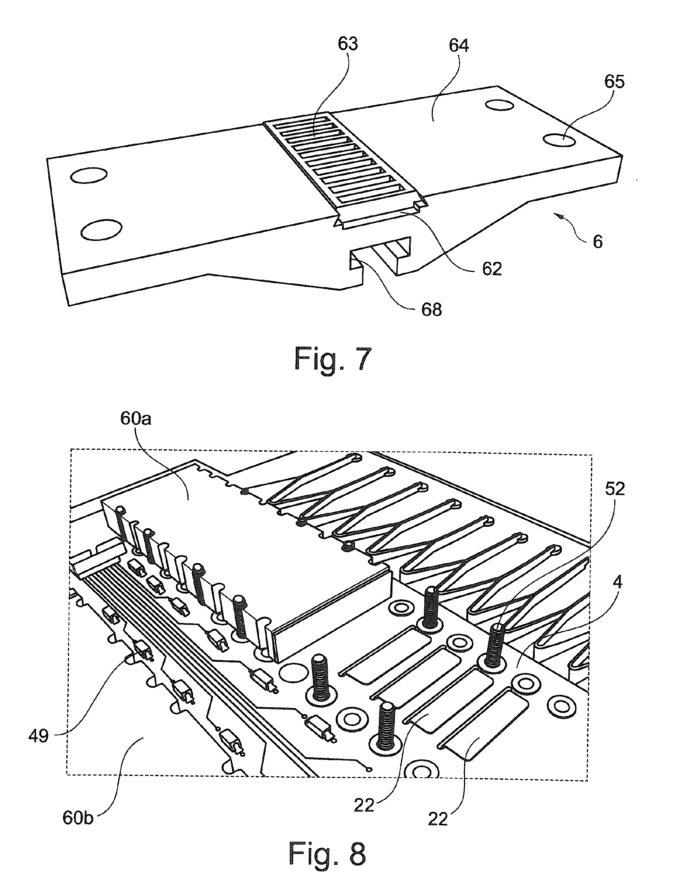

Fig. 7 shows a busbar 6 in more detail. The shown busbar 6 corresponds to the busbars used in Fig. 6 and contacts two pouch electrodes 22, 23. The busbar 6 has an electrode contact surface 64 that is substantially planar. Four holes 65 are provided for mounting and fixing the busbar 6 to the PCB 4. The holes 64 are arranged on the busbar 6 such that they correspond to holes 54 in the PCB and the screws 52 can be inserted in the holes 65.

The busbar 6 may be made from a conductive material such as for example aluminium.

The busbar 6 may further comprise a roughened or rough section 63 in the electrode contact surface 64. The rough section 63 may be either directly formed in the electrode contact surface 64 or a rough element 63 may be inserted. In the example shown in Fig. 7 the busbar 6 has a groove 62 in which a multilam or multi blade element 63 with a louvered surface is inserted. This multi blade surface 63 is used to enhance and provide a well defined electrical contact with the pouch electrodes 22, 23 and to establish a well defined contact when the busbar 6 is pressed against the pouch electrode contacts 22, 23.

The busbars 6 further comprises a control groove 68 in which a support for control 8 can be inserted.

Fig. 8 shows another example of a busbar 60. The busbar 60 covers a plurality of pouch electrodes 22. An example shown in total ten pouch electrodes 22 are contacted by each busbars 60. In this case it is not necessary to use all fixation bores 45 in PCB board 4 for the fixation of the busbars 6. For example each second hole 45 can be used. The busbars 60 of Fig. 8 does not have any control fixation groove 68 and the control 8 may be arranged at a different place.

In this case all pouch cells 2 are contacted by one busbar 60 may have the same polarity. For example, only positive pouch electrodes 22 may be contacted by busbars 60a while a second busbar 60b arranged on the second row of electrodes is contacted to the negative pouch electrodes 23.

While the examples above have been described with respect to specific arrangements of the pouch cells 2, a person skilled in the art will arrange the pouch cells 2 and the corresponding busbars 6, 60, 60a, 60b in any possible combination to combine parallel and series switching of the individual pouch cells in the desired manner. A person skilled in the art will understand that the features of the present disclosure can be combined to achieve any combination size of battery stacks 1. The described system is very flexible and can be quickly and easily adapted to obtain a desired capacities or nominal tensions.

A battery control or monitoring unit 8 may be arranged directly on the busbars 6 or may be arranged at a different place in the battery. The control or monitoring unit 8 may be a control generally known in the art and may be used for controlling the voltage in the cells, the temperature, charging or a load of the battery stack 1.

It has to be noted that features described in the above examples can be combined in any manner and a person skilled in the art will adapt the shown examples to specific needs of and requirements of the desired battery.

## Claims

1. An apparatus for electrically contacting at least one electrode (22, 23) of one or more electrochemical cells, the apparatus comprising:
- a non-conductive electrode pass-through element (4) with at least one electrode pass-through opening (41); and
- at least one contact element (6) at least partially made from a conductive material and releasably mountable to the electrode pass-through element (4) with a defined pressure, and
- further comprising the at least one electrochemical cell wherein the at least one electrode (22; 23) of the at least one electrochemical cell passes through the at least one electrode pass-through opening (41), is bent after being passed through the pass-through opening (41) and is clamped by the defined controlled pressure between the electrode pass-through element (4) and the at least one contact element (6).

2. The apparatus of claim 1, wherein a plurality of the pass-through openings (41) are arranged in at least one row.

3. The apparatus of any one of the preceding claims, wherein the one or more openings (41) in the electrode pass-through element (4) have the form of a slit.

4. The apparatus of any one of the preceding claims, wherein the electrode pass-through element (4) is a printed circuit board (PCB).

5. The apparatus of any one of the preceding claims, wherein the electrode pass-through element (4) comprises at least one cell voltage or temperature sensor contact (42) arranged adjacently to the at least one pass-through opening (41).

6. The apparatus of claim 5, further comprising an electrical connection (43, 44) between the at least one cell voltage or temperature sensor contact (42) and a monitoring unit (8)

7. The apparatus of any one of the preceding claims, wherein the pass-through element (4) comprises at least one of a temperature sensor of a cell voltage sensor.

8. The apparatus of any one of the preceding claims, wherein the at least one contact element (6) is a busbar (6).

9. The apparatus of any one of the preceding claims, wherein the contact element (6) has a substantially planar conductive contact surface (64).

10. The apparatus of any one of the preceding claims, wherein the contact surface comprises at least one section with a rough surface (63).

11. The apparatus of claim 10, wherein the rough surface (63) is at least one of a louvered surface, one or more blades or protrusions or a combination thereof.

12. The apparatus of any one of claims 9 to 11, wherein the contact surface (64) covers at least two pass-through openings (41).

13. The apparatus of any one of the preceding claims, the contact element further comprising a control device receiving section (68).

14. A busbar element (6) for contacting at least one electrode (22, 23) of one or more electrochemical cells, wherein the busbar element comprises (6) at least one substantially planar contact surface (64) made from a conductive material, wherein at least a portion of the substantially planar contact surface (64) comprises a rough surface for enhancing the electrical contact with the electrode.

15. The busbar element (6) of claim 14, wherein the roughened surface is at least one of a serrated surface, a notched surface, one or more blades or protrusions or a combination thereof.

16. The busbar element (6) of claim 14 or15, further comprising a connector receiving section.

17. A method for electrically contacting at least one electrode (22, 23) of one or more electrochemical cells, the method comprising
- passing the at least one electrode through an electrode pass-through opening (41) of a non-conductive electrode pass-through element (4);
- bending a portion of the at least one electrode passed through the electrode pass-through opening (41);
- arranging the portion of the at least one electrode between the electrode pass-through element (4) and one at least partially conductive contact element (6) and pressing the contact element (6) against the electrode pass-through element (4) with a defined, controlled pressure.
